# EUROPEAN PATENT SPECIFICATION

(11) **EP 4 493 447 B1**
(45) Date of publication and mention of the grant of the patent: **11.11.2026**
(21) Application number: 23713762.5
(22) Date of filing: 13.03.2023
(51) Int. Cl.: B62J 6/04, B62J 6/05, B62J 6/055

(54) **THREE WHEELED MOTORCYCLE WITH REAR LIGHT ASSEMBLY**
DREIRÄDRIGES MOTORRAD MIT RÜCKLICHTANORDNUNG
MOTOCYCLETTE À TROIS ROUES AVEC ENSEMBLE DE LUMIÈRE ARRIÈRE

(30) Priority: 16.03.2022 IT 202200005108
(43) Date of publication of application: 22.01.2025
(73) Proprietor: Piaggio & C. SpA, 56025 Pontedera (IT)
(72) Inventor: FERRARO, Vincenzo, I-56025 Pontedera (IT); MELIGHETTI, Paolo, I-56025 Pontedera (IT); CAVALLINI, Renzo, I-56025 Pontedera (IT)
(74) Representative: Carangelo, Pierluigi
(86) International application number: PCT/IB2023/052391
(87) International publication number: WO 2023/175470

(56) References cited:
- WO-A1-2018/180432
- JP-A- 2014 184 800
- JP-A- H0 316 888
- KR-B1- 100 396 990
- TW-A- 201 625 443
- US-A1- 2011 074 689
- US-A1- 2014 167 386
- US-A1- 2016 129 967

## Description

### TECHNICAL FIELD OF THE INVENTION

The present invention relates to the technical field of ridable saddle motorcycles and in particular relates to a three wheeled motorcycle with a rear light assembly.

### BACKGROUND OF THE INVENTION

Lighting systems which allow the safe use of motorcycles have been fitted on motor vehicles, including motorcycles, for a long time. Indeed, motorcycles are provided with a headlight, a rear light, and front and rear turn lights, etc. The headlight makes it possible to illuminate an area of ground located in front of the motorcycle and make the motorcycle visible to people located in front of the motorcycle. The rear light allows people or vehicles located behind the motorcycle to see the motorcycle and signals the activation of the braking system.

Three wheeled ridable saddle motorcycles, in particular motorcycles having two tilting and steering front wheels and one rear wheel, have been produced and marketed for a long time. On motorcycles like these, the three wheels are generally symmetrical with respect to the longitudinal median axis of the motorcycle.

Patent application WO 2019/229669 A1 describes, among others, embodiments of a motorcycle having two tilting and steering front wheels and one rear wheel, wherein the rear light assembly comprises turn signals which are supported by arms protruding from the tail portion of the vehicle.

Currently, to increase safety and riding comfort, there is an increasing trend to bring improvements to motorcycle lighting systems. This trend can also be found in three wheeled motorcycles, e.g., patent application WO 2019/123146 A1 describes solutions to improve the performance of the front light assembly of a motorcycle with two front tilting and steering wheels. The document US2016129967A1 discloses a three wheeled motorcycle in accordance with the preamble of claim 1.

In contrast, as far as rear light assemblies are concerned, the currently known solutions in three wheeled motorcycles are not fully satisfactory, because these known solutions still do not allow the efficient indication of the rear footprint of the motorcycles. Indeed, to date, solutions developed for two-wheeled ridable saddle motorcycles, such as scooters, which typically have a smaller footprint than three wheeled motorcycles, have been simply applied to three-wheel motorcycles.

It is a general object of the present description to provide a three wheeled motorcycle comprising a rear light assembly which can indicate the footprint of the motorcycle with particular efficiency. It is a further general object of the present description to provide a three wheeled motorcycle comprising a rear light assembly which is relatively simple to manufacture and install.

The objects described and additional objects are achieved by means of a three wheeled motorcycle as defined, in general, in claim 1. The alternative preferred and advantageous embodiments of the aforesaid three wheeled motorcycle are defined in the accompanying dependent claims.

The invention will be better understood from the following detailed description of particular embodiments thereof, given by way of a non-limiting example, with reference to the accompanying drawings briefly described in the following paragraph.

### BRIEF DESCRIPTION OF THE DRAWINGS

In the accompanying drawings:
- Figure 1 shows a side elevation view of a non-limiting embodiment of a three wheeled motorcycle comprising a rear light assembly;
- Figure 2 shows an isometric side-rear view of the three wheeled motorcycle;
- Figure 3 shows a rear elevation view of the three wheeled motorcycle;
- Figure 4 shows a plan view of the three wheeled motorcycle;
- Figure 5 shows an enlarged part of figure 3;
- Figure 6 shows a front view of an embodiment of a reflector which can be comprised in the rear light assembly;
- Figure 7 shows is an isometric view of the reflector of figure 6;
- Figure 8 shows an isometric view of an enlarged part of the reflector of figure 6.

### DETAILED DESCRIPTION

The same or similar elements are indicated by the same reference signs in the accompanying drawings.

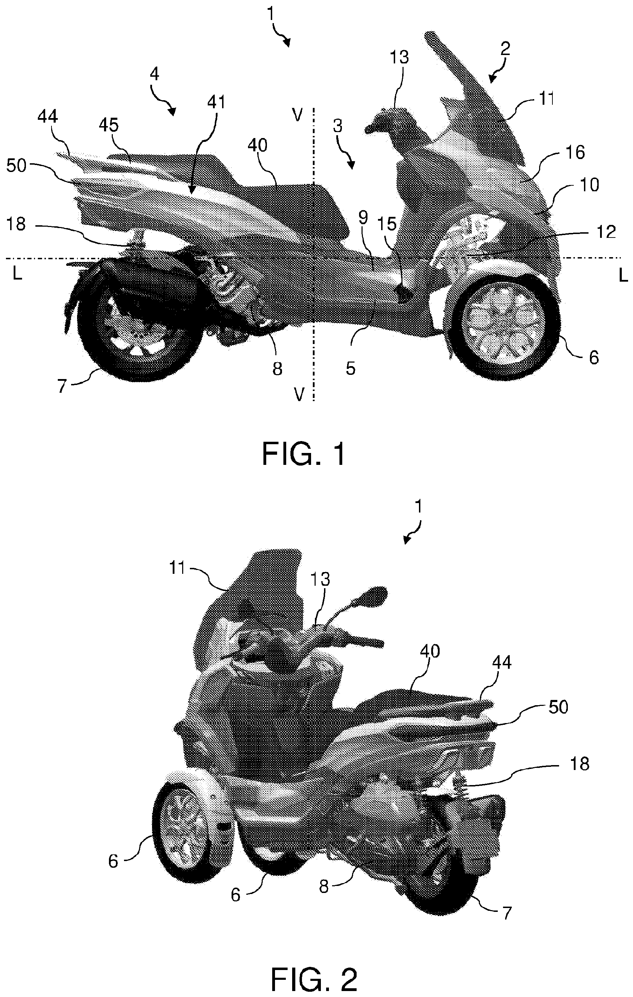

Figure 1 shows, according to the invention, a ridable saddle vehicle 1, that consists of a three wheeled motorcycle comprising two front wheels 6 and one rear wheel 7. And the two front wheels 6 are both tilting and steering.

Hereinafter in the present description, without thereby introducing any limitations, reference will be made to a generic three wheeled motorcycle 1, thereby meaning the following description may apply in general to any type of ridable saddle vehicle comprising:
- a main body 2, 3, 4;
- a ridable saddle 40 fixed to the main body 2, 3, 4;
- three wheels 6, 7 constrained to the main body 2, 3, 4;
- an engine 8, in particular a heat, electric, or hybrid traction motor or engine, operatively connected to at least one of the wheels 6, 7.

In the particular example shown in figure 1, the three wheeled motorcycle 1 comprises an engine 8, operatively connected either directly or indirectly to the rear wheel 7, which is thus a traction wheel of the three wheeled motorcycle 1.

The main body 2, 3, 4 of the three wheeled motorcycle 1 extends along a longitudinal axis L-L, which is parallel to the axis of travel of the motorcycle 1. Along the longitudinal axis L-L, the main body 2, 3, 4 of the three wheeled motorcycle 1 has a front part 2, a tail part 4, and a middle part 3 interposed between the front part 2 and the tail part 4.

In width, the main body 2, 3, 4 extends transversely between two side flanks L_s and R_s, respectively between a left side flank L_s and a right side flank R_s. A transverse direction or axis is defined as a generally horizontal direction T-T or axis perpendicular to the longitudinal axis L-L.

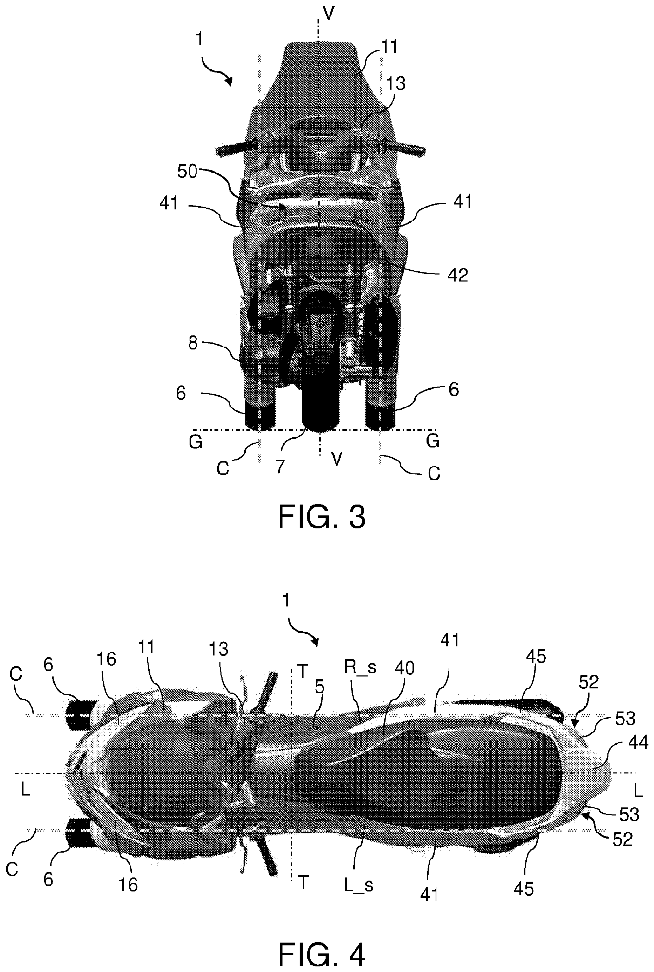

In the present description, unless otherwise indicated, the terms rear, front, upper, lower, and side refer to the directions identified by the three wheeled motorcycle 1 following the direction of normal orientation of a motorcycle placed upright on level ground and not tilted sideways or steered. In figure 3, the flat terrain is indicated by the dotted line G-G. A vertical axis or direction V-V is an axis or direction perpendicular to the longitudinal axis L-L and the transverse axis T-T.

For example, the middle part 3 of the main body 2, 3, 4 comprises a footboard 5. For example, the footboard 5 is surmounted by a central tunnel 9.

In the example, the front part 2 of the main body 2, 3, 4 comprises a front shield 10, a windshield 11, a front suspension system 12, a steering handlebar 13, the front wheel 6, or better two front wheels 6. Advantageously, the front suspension system 12 is an articulated quadrilateral suspension system, preferably provided with an electronically operable tilt blocking system.

According to the invention, the tail part 4 comprises the ridable saddle 40, the rear wheel 7, a rear suspension 18, and a tail fairing 41, 42. The tail fairing 41, 42 preferably comprises two side portions 41 and a middle portion 42, which connects the side portions 41 at the rear of the three wheeled motorcycle 1. The tail fairing 41, 42 is arranged below the ridable saddle 40.

The tail part 4 of the main body 2, 3, 4 preferably comprises a luggage rack 44 and two grab handles 45 for a possible passenger. For example, the luggage rack 44 is a plate to which a top box can be fixed. Preferably, the luggage rack 44 and the two grab handles 45 form a single assembly, for example integrated into one piece.

According to an embodiment, the three wheeled motorcycle 1 is a tricycle. A tricycle is defined as a vehicle having the following characteristics:
- Three wheels 6, 7 arranged symmetrically relative to the longitudinal axis L-L;
- A wheel track greater than 46 cm;
- A parking brake;
- A rear brake pedal 15.

The three wheeled motorcycle 1 comprises at least one front light assembly 16 fixed to the front part 2. In a situation in which the steering handlebar 13 is not rotated, the front light assembly 16 is such that it emits at least one light beam, in particular a light beam, predominantly directed along the longitudinal axis L-L to illuminate a portion of space located in front of the motorcycle 1.

The front light assembly 16 is selectively controllable by the driver, e.g., by means of one or more switches located on the steering handlebar 13, to emit:
- a low light beam; or
- a high light beam; or
- a high light beam flash during the low light beam emission.

The three wheeled motorcycle 1 further comprises a rear light assembly 50 fixed to the tail part 4, e.g., integrated into the tail part 4. The rear light assembly 50 is preferably at least partially recessed in the tail fairing 41, 42.

The rear light assembly 50 comprises a middle luminous portion 51 configured to perform one or more of the following functions:
- make the three wheeled motorcycle 1 visible to people or vehicles located behind the motorcycle 1;
- signal the activation of the braking system (brake light) of the three wheeled motorcycle 1.

Therefore, the middle luminous portion 51 is configured to make the three wheeled motorcycle 1 optically visible to people or vehicles located behind the motorcycle 1 and/or to optically signal a braking of the motorcycle 1.

The rear light assembly 50 further comprises two side luminous portions 52 arranged at two opposite end portions of the light assembly 50 and configured to perform one or more of the following functions:
- Direction or turn indication when individually activated;
- Emergency or hazard indication when activated simultaneously.

Therefore, the two side luminous portions 52 arranged at the two opposite end portions of the rear light assembly 50 are configured to act as turn signals and/or hazard lights. Opposite end portions of the rear light assembly 50 are defined as two end portions arranged in transversely opposite positions to each other.

The middle luminous portion 51 of the rear light assembly 50 extends continuously between the side portions 52 to join them together. According to an advantageous embodiment, in the rear light assembly 50, the side luminous portions 52 are immediately adjacent to the middle luminous portion 51. Substantially, the rear light assembly 50 is unique and comprises both the rear position and stop lights (middle luminous portion 51 and the turn signals (side luminous portions 52) in one assembly.

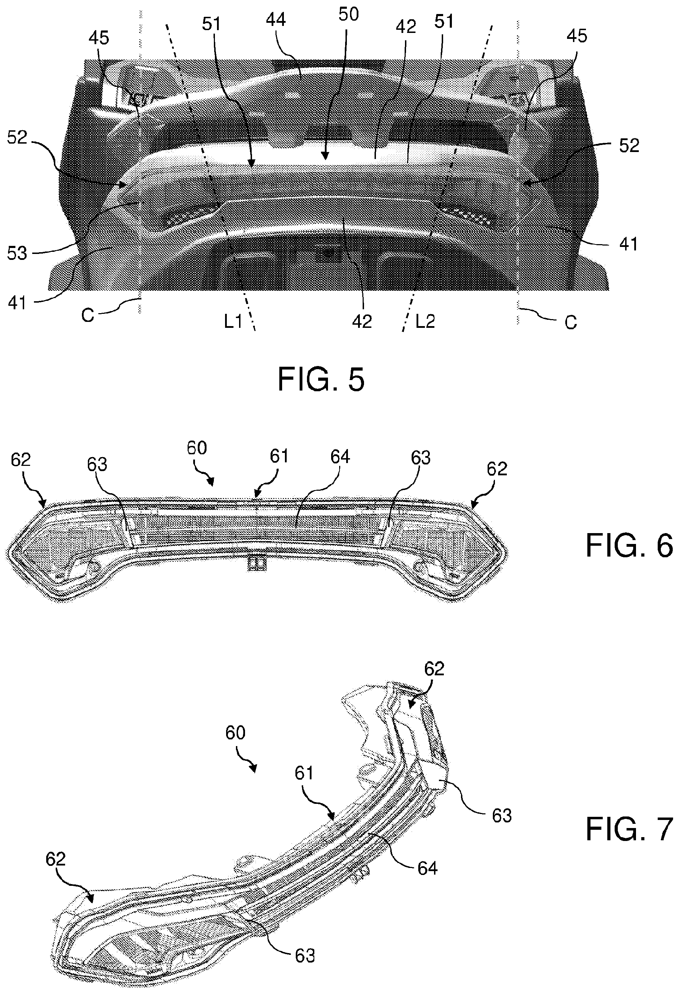

Referring to figure 5, the middle luminous portion 51 is the portion of the rear luminous assembly 50 delimited between the two dashed lines L1 and L2.

According to an advantageous embodiment, the side luminous portions 52 of the rear light assembly 50 have a maximum vertical width greater than the maximum vertical width of the middle luminous portion 51.

According to an advantageous embodiment, the side luminous portions 52 on the opposite side relative to the middle luminous portion 51 are shaped as an arrow or a V.

According to an aspect, the middle luminous portion 51 of the rear light assembly 50 has a minimum width at the middle which increases in a tapered manner towards two mutually transverse, opposite sides of the middle luminous portion 51. Preferably, the transversely opposite sides of the middle luminous portion 51 are two sides inclined so that the middle luminous portion 51 laterally expands in a direction from the bottom upwards. In figure 5, said transversely opposite sides pass through the dashed lines L1, L2.

According to a particularly advantageous embodiment, the middle luminous portion 51 has an illuminating surface at least twice the illuminating surface of each of the two side luminous portions 52. In particular, the middle luminous portion 51 has an illuminating surface greater than or equal to 5,000.00 mm². According to an additional or alternative embodiment, each of the side luminous portions 52 has an illuminating surface greater than or equal to 2,258 mm².

According to the invention, the rear light assembly 50 has an overall width substantially greater than or equal to the wheel track of the three wheeled motorcycle 1, where the term wheel track means the distance between the contact points of the two front wheels 6 with terrain G-G. Greater means that the overall width of the rear light assembly 50 is wider than the wheel track by 3%-10%, e.g. 5%. In the automotive industry, the wheel track is the distance between the respective centers of the two wheels arranged on the same transverse axis. In this case, said wheels arranged on the same axis are the front wheels 6. The wheel track measurement is taken at the center of the footprints on the ground of the tires of the two wheels 6 on the same axis. In the example shown in the figures, with reference to figures 3, 4, and 5, the wheel track is the distance between the two dashed lines C passing through the centers of the two front wheels 6.

According to an additional or alternative embodiment, the distance between the side luminous portions 52 is greater than or equal to 228.00 mm.

According to a particularly advantageous embodiment, the rear light assembly 50 comprises a single cover lens 53 which covers the middle luminous portion 51 and the two side luminous portions 52. Advantageously, the cover lens 53 is a single, continuous lens, and this means that the rear light assembly 50 has a single cover lens 53 which constitutes one piece.

According to an advantageous embodiment, the rear light assembly 50 has a single, continuous reflector 60 divided into a middle reflector section 61 corresponding to the middle luminous portion 51 and two side reflector sections 62 each corresponding to a respective side luminous portion 52. Advantageously, the reflector 60 is a single, continuous reflector and this means that the rear light assembly 50 has only one reflector 60 constituting one piece.

According to a particularly advantageous embodiment, the reflector 60 comprises two inner partition walls 63 which optically delimit the middle reflector section 61 from the side reflector sections 62. The interior partition walls 63 are preferably reflective but can also be opaque. Preferably, wherein the inner partition walls 63 are inclined relative to a vertical axis passing through the middle of the reflector 60, more preferably so as to cause a widening of the middle reflector section 61 from the bottom upwards.

According to a particularly advantageous embodiment, the reflector 60 comprises an internal partition 64, e.g. reflective, which extends transversely between the internal partition walls 63 and contributes to the structural rigidity of the reflector 60. Preferably, the inner partition 64 has two end portions each of which is connected to a respective inner partition wall 63.

According to an embodiment, the side reflector sections 62, have a reflector wall having one or more steps 66. Advantageously, the steps 66 are curved and concave and preferably have at least a partially faceted reflective surface.

The rear light assembly 50 comprises a first array of light sources 81 arranged in the middle luminous portion 51 and a second and third array of light sources 82, in which each of said second and third arrays is arranged in a respective side luminous portion 52. The aforesaid optical sources 81, 82 are preferably LED sources.

According to an advantageous embodiment, the reflector 60 is single and continuous 60 and is covered by a cover lens 53, which is also single and continuous.

The cover lens 53 is made of a transparent material that is neutral in color or at least partially colored. For example, the cover lens 53 is made of plexiglass or glass. Preferably, the cover lens 53 has an inner surface configured to refract light radiation emitted by the rear luminous assembly 50, e.g., said inner surface is lenticular or faceted.

When viewed from above, the cover lens 53 is preferably C- or U-shaped to extend either into or onto the middle portion 42 and either into or onto the side portions 41 of the tail fairing 41, 42.

As shown in figure 4, when viewed from above, the cover lens 53 has two portions located at the side luminous portions 52 of the rear light assembly 50 which protrude transversely beyond the luggage rack support 44.

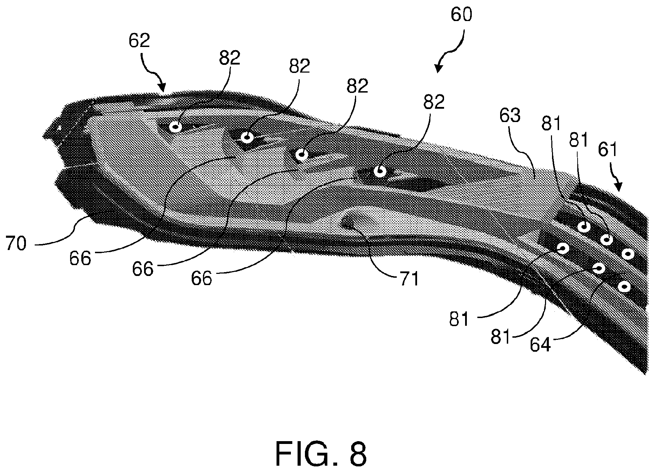

Referring to figure 8, the rear light assembly 50 comprises a supporting base 70 to which the reflector 60 is fixed, e.g., by means of one or more screws, or alternative reversible or irreversible fixing means, e.g., snap-on and snap-off fixing means. Preferably, the supporting base 70 is also single and continuous and more preferably comprises a semi-shell-shaped body. The optical sources 81, 82 are fixed to the supporting base 70 and/or reflector 60. The supporting base 70 is preferably made of a hard plastic material, e.g., ABS.

According to an advantageous embodiment, the cover lens 53 is also fixed to the supporting base 70, e.g., by means of one or more screws or snap fastening elements or similar or equivalent fastening elements. Thus, the cover lens 53 and supporting base 70 form a closed container which internally houses the reflector 60 and the light sources 81, 82. Preferably, a gasket is interposed and tightened between the supporting base 70 and the cover lens 53.

The supporting base 70 is preferably recessed into the tail fairing 41, 42 so that at least a first portion of the lens 53 is flush or substantially flush with the tail fairing 41, 42, e.g., a peripheral edge portion, and more preferably so that at least a second portion of the lens 53, e.g., a transversely middle portion, protrudes beyond the tail fairing 41, 42.

Based on the explanation above, it is thus possible to understand how a three wheeled motorcycle 1 of the type described above makes it possible to achieve the purposes indicated above with reference to the prior art. Indeed, the rear light assembly 50 can be sized to make optimal use of the space available on the tail end 4 of the three wheeled motorcycle 1 and be particularly efficient in emitting luminous signals required in the rear end of the motorcycle 1. Furthermore, the assembly of the rear light assembly 50 is relatively simple and the production costs are relatively contained. Furthermore, the operations for installing the rear light assembly 50 on board the three wheeled motorcycle 1 are relatively simple. The same applies to the removal, replacement, and maintenance of the rear light assembly.

In addition, the rear light assembly 50 with a transverse dimension substantially greater than or equal to the wheel track of the three wheeled vehicle 1 allows for improved driver safety, particularly in night driving. In detail, the extended transverse dimension of the rear light assembly 50 defines and indicates the transverse footprint of the three wheeled vehicle 1 to another following vehicle. This may allow, for example, an overtaking maneuver carried out more safely by the following vehicle.

In a preferred embodiment, the middle luminous portion 51 has a transverse extension substantially equal to the wheel track of the three wheeled vehicle 1.
Preferably, the two side portions 52 extend on respective sides of the tail fairing 41. In particular, the two side portions 52 are visible when looking at the vehicle 1 from a side view, such as the one in figure 1.

## Claims

1. A three wheeled motorcycle (1) comprising:
- two front wheels (6) and one rear wheel (7), wherein the two front wheels (6) are both tilting and steering;
- a main body (2,3,4), comprising a front portion (2), a middle portion (3), and a tail portion (4), wherein the tail portion (4) comprises a ridable saddle (40), the rear wheel (7), a rear suspension (18), and a tail fairing (41, 42); and the tail fairing (41,42) is arranged below the ridable saddle (40) ;
- the ridable saddle (40) fixed to the main body (2,3,4);
- the three wheels (6,7) constrained to the main body (2,3,4), wherein two of said three wheels define a wheel track of the three wheeled motorcycle (1);
wherein the wheel track is defined as the distance between the contact points of the two front wheels (6) with terrain (G);
- an engine (8) operatively connected to at least one of the three wheels (6,7);
- a rear light assembly (50) fixed to the tail portion (4);
and the three wheeled motorcycle, **characterised in that**
- the rear light assembly (50) comprises a middle luminous portion (51) configured to make the motorcycle (1) visible to people or vehicles located behind the motorcycle (1) and/or to signal a braking of the motorcycle (1);
- the rear light assembly (50) comprises two side luminous portions (52) arranged at two opposite end portions of the light assembly (50) configured to act as turn signals and/or hazard lights;
- the rear light assembly (50) is at least partially recessed in the tail fairing (41, 42);
- the middle luminous portion (51) extends seamlessly between the side luminous portions (52) mutually joining them;
- the middle luminous portion (51) has an illuminating surface at least twice as large as the illuminating surface of each of the side luminous portions (52);
- the rear light assembly (50) has an overall width substantially either greater than or equal to a wheel track of the three wheeled motorcycle (1).

2. A three wheeled motorcycle (1) according to claim 1, wherein the side luminous portions (52) are immediately adjacent to the middle luminous portion (51).

3. A three wheeled motorcycle (1) according to claim 1 or 2, wherein the rear light assembly (50) comprises a single, continuous cover lens (53) which covers the middle luminous portion (51) and the side luminous portions (52).

4. A three wheeled motorcycle (1) according to claim 3, wherein, when viewed from above, the cover lens (53) is preferably C-shaped or U-shaped.

5. A three wheeled motorcycle (1) according to any one of the preceding claims, wherein the rear light assembly (50) has a single, continuous reflector (60) divided into a middle reflector section (61) corresponding to the middle luminous portion (51) and two side reflector sections (62) each corresponding to a respective side luminous portion (52).

6. A three wheeled motorcycle (1) according to claim 5, wherein said reflector (60) comprises two inner partitions (63) which optically delimit the middle reflector section (61) from the side reflector sections (62).

7. A three wheeled motorcycle (1) according to claim 6, wherein the inner partitions (63) are inclined relative to a vertical axis passing through the middle of the reflector (60), more preferably resulting in a widening of the middle reflector section (61) from the bottom upwards.

8. A three wheeled motorcycle (1) according to any one of claims 5 to 7, wherein the side reflector sections (62) have a reflecting wall having one or more curved and concave steps (66).

9. A three wheeled motorcycle (1) according to any one of the preceding claims, wherein the side luminous portions (52) of the rear light assembly (50) have a maximum vertical width greater than the maximum vertical width of the middle luminous portion (51).

10. A three wheeled motorcycle (1) according to any one of the preceding claims, wherein the middle luminous portion (51) of the rear light assembly (50) has a minimum width at the middle which increases in a tapered manner towards two mutually transverse, opposite sides of the middle luminous portion (51).

11. A three wheeled motorcycle (1) according to claim 12, wherein the transversely opposite sides of the middle luminous portion (51) are inclined so that the middle luminous portion (51) laterally widens in a direction from the bottom upwards.

12. A three wheeled motorcycle (1) according to any one of the preceding claims, wherein:
- the middle luminous portion (51) has an illuminating surface greater than or equal to 5,000.00 mm²;
- each of the side luminous portions (52) has an illuminating surface greater than or equal to 2,258 mm².

13. A three wheeled motorcycle (1) according to any one of the preceding claims, wherein the side luminous portions (52) extend on respective opposite sides of the tail fairing (41, 42).

## Patentansprüche

1. Dreirädriges Motorrad (1), umfassend:
- zwei Vorderräder (6) und ein Hinterrad (7), wobei die beiden Vorderräder (6) sowohl neigbar als auch lenkbar sind;
- einen Hauptkörper (2,3,4), umfassend einen Vorderabschnitt (2), einen Mittelabschnitt (3) und einen Heckabschnitt (4), wobei der Heckabschnitt (4) einen Fahrersattel (40), das Hinterrad (7), eine Hinterradaufhängung (18) und eine Heckverkleidung (41,42) umfasst; und wobei die Heckverkleidung (41,42) unterhalb des Fahrersattels (40) angeordnet ist;
- den am Hauptkörper (2,3,4) befestigten Fahrersattel (40);
- die drei Räder (6,7), die mit dem Hauptkörper (2,3,4) verbunden sind, wobei zwei der drei Räder eine Spurweite des dreirädrigen Motorrads (1) definieren;
wobei die Spurweite als der Abstand zwischen den Kontaktpunkten der beiden Vorderräder (6) mit dem Boden (G) definiert ist;
- einen Motor (8), der betriebsmäßig mit mindestens einem der drei Räder (6,7) verbunden ist;
- eine am Heckabschnitt (4) befestigte Rücklichtanordnung (50);
wobei das dreirädrige Motorrad **dadurch gekennzeichnet ist, dass**
- die Rücklichtanordnung (50) einen mittleren Leuchtabschnitt (51) umfasst, der dazu ausgebildet ist, das Motorrad (1) für hinter dem Motorrad (1) befindliche Personen oder Fahrzeuge sichtbar zu machen und/oder ein Bremsen des Motorrads (1) anzuzeigen;
- die Rücklichtanordnung (50) zwei seitliche Leuchtabschnitte (52) umfasst, die an zwei gegenüberliegenden Endabschnitten der Rücklichtanordnung (50) angeordnet und dazu ausgebildet sind, als Fahrtrichtungsanzeiger und/oder Warnblinkleuchten zu wirken;
- die Rücklichtanordnung (50) zumindest teilweise in der Heckverkleidung (41,42) versenkt ist;
- sich der mittlere Leuchtabschnitt (51) nahtlos zwischen den seitlichen Leuchtabschnitten (52) erstreckt und diese miteinander verbindet;
- der mittlere Leuchtabschnitt (51) eine Leuchtfläche aufweist, die mindestens doppelt so groß ist wie die Leuchtfläche jedes der seitlichen Leuchtabschnitte (52);
- die Rücklichtanordnung (50) eine Gesamtbreite aufweist, die im Wesentlichen größer als oder gleich einer Spurweite des dreirädrigen Motorrads (1) ist.

2. Dreirädriges Motorrad (1) nach Anspruch 1, wobei die seitlichen Leuchtabschnitte (52) unmittelbar an den mittleren Leuchtabschnitt (51) angrenzen.

3. Dreirädriges Motorrad (1) nach Anspruch 1 oder 2, wobei die Rücklichtanordnung (50) eine einzige, durchgehende Abdecklinse (53) umfasst, die den mittleren Leuchtabschnitt (51) und die seitlichen Leuchtabschnitte (52) abdeckt.

4. Dreirädriges Motorrad (1) nach Anspruch 3, wobei die Abdecklinse (53) in Draufsicht vorzugsweise C-förmig oder U-förmig ist.

5. Dreirädriges Motorrad (1) nach einem der vorhergehenden Ansprüche, wobei die Rücklichtanordnung (50) einen einzigen, durchgehenden Reflektor (60) aufweist, der in einen mittleren Reflektorabschnitt (61), der dem mittleren Leuchtabschnitt (51) entspricht, und zwei seitliche Reflektorabschnitte (62), die jeweils einem entsprechenden seitlichen Leuchtabschnitt (52) entsprechen, unterteilt ist.

6. Dreirädriges Motorrad (1) nach Anspruch 5, wobei der Reflektor (60) zwei innere Trennwände (63) umfasst, die den mittleren Reflektorabschnitt (61) optisch von den seitlichen Reflektorabschnitten (62) abgrenzen.

7. Dreirädriges Motorrad (1) nach Anspruch 6, wobei die inneren Trennwände (63) gegenüber einer vertikalen Achse, die durch die Mitte des Reflektors (60) verläuft, geneigt sind, wodurch vorzugsweise eine Verbreiterung des mittleren Reflektorabschnitts (61) von unten nach oben bewirkt wird.

8. Dreirädriges Motorrad (1) nach einem der Ansprüche 5 bis 7, wobei die seitlichen Reflektorabschnitte (62) eine reflektierende Wand mit einer oder mehreren gekrümmten und konkaven Stufen (66) aufweisen.

9. Dreirädriges Motorrad (1) nach einem der vorhergehenden Ansprüche, wobei die seitlichen Leuchtabschnitte (52) der Rücklichtanordnung (50) eine maximale vertikale Breite aufweisen, die größer ist als die maximale vertikale Breite des mittleren Leuchtabschnitts (51).

10. Dreirädriges Motorrad (1) nach einem der vorhergehenden Ansprüche, wobei der mittlere Leuchtabschnitt (51) der Rücklichtanordnung (50) in der Mitte eine Mindestbreite aufweist, die sich in verjüngender Weise zu zwei einander transversal gegenüberliegenden Seiten des mittleren Leuchtabschnitts (51) hin vergrößert.

11. Dreirädriges Motorrad (1) nach Anspruch 12, wobei die transversal gegenüberliegenden Seiten des mittleren Leuchtabschnitts (51) geneigt sind, sodass sich der mittlere Leuchtabschnitt (51) in einer Richtung von unten nach oben seitlich verbreitert.

12. Dreirädriges Motorrad (1) nach einem der vorhergehenden Ansprüche, wobei:
- der mittlere Leuchtabschnitt (51) eine Leuchtfläche von mindestens 5.000,00 mm² aufweist;
- jeder der seitlichen Leuchtabschnitte (52) eine Leuchtfläche von mindestens 2.258 mm² aufweist.

13. Dreirädriges Motorrad (1) nach einem der vorhergehenden Ansprüche, wobei sich die seitlichen Leuchtabschnitte (52) an entsprechenden gegenüberliegenden Seiten der Heckverkleidung (41,42) erstrecken.

## Revendications

1. Motocyclette à trois roues (1) comprenant :
- deux roues avant (6) et une roue arrière (7), les deux roues avant (6) étant toutes deux aptes à s'incliner et à être dirigées ;
- un corps principal (2,3,4), comprenant une partie avant (2), une partie médiane (3) et une partie arrière (4), la partie arrière (4) comprenant une selle (40), la roue arrière (7), une suspension arrière (18) et un carénage arrière (41, 42) ; et le carénage arrière (41,42) étant disposé au-dessous de la selle (40) ;
- la selle (40) étant fixée au corps principal (2,3,4) ;
- les trois roues (6,7) étant contraintes au corps principal (2,3,4), deux desdites trois roues définissant une voie de roue de la motocyclette à trois roues (1) ;
la voie de roue étant définie comme la distance entre les points de contact des deux roues avant (6) avec le sol (G) ;
- un moteur (8) relié de manière opératoire à au moins une des trois roues (6,7) ;
- un ensemble de lumière arrière (50) fixé à la partie arrière (4) ;
et la motocyclette à trois roues étant **caractérisée en ce que**
- l'ensemble de lumière arrière (50) comprend une partie lumineuse centrale (51) configurée pour rendre la motocyclette (1) visible aux personnes ou aux véhicules situés derrière la motocyclette (1) et/ou pour signaler un freinage de la motocyclette (1) ;
- l'ensemble de lumière arrière (50) comprend deux parties lumineuses latérales (52) disposées au niveau de deux portions d'extrémité opposées de l'ensemble de lumière (50), configurées pour agir comme indicateurs de changement de direction et/ou feux de détresse ;
- l'ensemble de lumière arrière (50) est au moins partiellement encastré dans le carénage arrière (41, 42) ;
- la partie lumineuse centrale (51) s'étend de manière continue entre les parties lumineuses latérales (52), en les reliant mutuellement ;
- la partie lumineuse centrale (51) présente une surface d'éclairage au moins deux fois supérieure à la surface d'éclairage de chacune des parties lumineuses latérales (52) ;
- l'ensemble de lumière arrière (50) présente une largeur totale sensiblement supérieure ou égale à une voie de roue de la motocyclette à trois roues (1).

2. Motocyclette à trois roues (1) selon la revendication 1, dans laquelle les parties lumineuses latérales (52) sont immédiatement adjacentes à la partie lumineuse centrale (51).

3. Motocyclette à trois roues (1) selon la revendication 1 ou 2, dans laquelle l'ensemble de lumière arrière (50) comprend une unique lentille de recouvrement continue (53) qui recouvre la partie lumineuse centrale (51) et les parties lumineuses latérales (52).

4. Motocyclette à trois roues (1) selon la revendication 3, dans laquelle, vue de dessus, la lentille de recouvrement (53) présente de préférence une forme en C ou une forme en U.

5. Motocyclette à trois roues (1) selon l'une quelconque des revendications précédentes, dans laquelle l'ensemble de lumière arrière (50) comporte un unique réflecteur continu (60) divisé en une section de réflecteur centrale (61) correspondant à la partie lumineuse centrale (51) et deux sections de réflecteur latérales (62) correspondant chacune à une partie lumineuse latérale respective (52).

6. Motocyclette à trois roues (1) selon la revendication 5, dans laquelle ledit réflecteur (60) comprend deux cloisons internes (63) qui délimitent optiquement la section de réflecteur centrale (61) par rapport aux sections de réflecteur latérales (62).

7. Motocyclette à trois roues (1) selon la revendication 6, dans laquelle les cloisons internes (63) sont inclinées par rapport à un axe vertical passant par le milieu du réflecteur (60), de manière à obtenir, de préférence, un élargissement de la section de réflecteur centrale (61) du bas vers le haut.

8. Motocyclette à trois roues (1) selon l'une quelconque des revendications 5 à 7, dans laquelle les sections de réflecteur latérales (62) présentent une paroi réfléchissante comportant un ou plusieurs gradins courbes et concaves (66).

9. Motocyclette à trois roues (1) selon l'une quelconque des revendications précédentes, dans laquelle les parties lumineuses latérales (52) de l'ensemble de lumière arrière (50) présentent une largeur verticale maximale supérieure à la largeur verticale maximale de la partie lumineuse centrale (51).

10. Motocyclette à trois roues (1) selon l'une quelconque des revendications précédentes, dans laquelle la partie lumineuse centrale (51) de l'ensemble de lumière arrière (50) présente une largeur minimale au milieu, qui augmente de manière effilée vers deux côtés opposés transversalement de la partie lumineuse centrale (51).

11. Motocyclette à trois roues (1) selon la revendication 12, dans laquelle les côtés transversalement opposés de la partie lumineuse centrale (51) sont inclinés de sorte que la partie lumineuse centrale (51) s'élargit latéralement dans une direction allant du bas vers le haut.

12. Motocyclette à trois roues (1) selon l'une quelconque des revendications précédentes, dans laquelle :
- la partie lumineuse centrale (51) présente une surface d'éclairage supérieure ou égale à 5.000,00 mm² ;
- chacune des parties lumineuses latérales (52) présente une surface d'éclairage supérieure ou égale à 2.258 mm².

13. Motocyclette à trois roues (1) selon l'une quelconque des revendications précédentes, dans laquelle les parties lumineuses latérales (52) s'étendent sur des côtés opposés respectifs du carénage arrière (41,42).
